# EUROPÄISCHE PATENTSCHRIFT

(11) **EP 0 807 650 B1**
(45) Veröffentlichungstag und Bekanntmachung des Hinweises auf die Patenterteilung: **22.10.2003**
(21) Anmeldenummer: 97107266.5
(22) Anmeldetag: 02.05.1997
(51) Int. Cl.: C08G 18/12, C08G 18/80, C08G 18/79, C08G 18/70, C08G 18/75, C08G 18/08, C03C 17/32

(54) **Beschichtungsmittel für Glas**
Coating composition for glass
Composition de revêtement pour le verre

(30) Priorität: 15.05.1996 DE 19619545
(43) Veröffentlichungstag der Anmeldung: 19.11.1997
(73) Patentinhaber: BAYER AG, 51368 Leverkusen (DE)
(72) Erfinder: Wilmes, Oswald, Dr., 51061 Köln (DE); Baumbach, Beate, Dr., 51373 Leverkusen (DE); Nachtkamp, Klaus, Dr., 40593 Düsseldorf (DE); König, Eberhard, Dr., 51375 Leverkusen (DE); Dearth, Randall, 51375 Leverkusen (DE); Bock, Manfred, Dr., 51375 Leverkusen (DE); Wieczorrek, Wolfhart, Dipl.-Ing., 51145 Köln (DE)

(56) Entgegenhaltungen:
- EP-A- 0 324 370
- EP-A- 0 469 389
- US-A- 4 403 085

## Beschreibung

Die Erfindung betrifft spezielle wäßrige Polyurethan-Bindemittelsysteme auf Basis von ausgewählten Ausgangsmaterialien, deren Herstellung und Verwendung, vorzugsweise als Beschichtungsmittel für Glas, vorzugsweise Glasflaschen.

Glasoberflächen werden beispielsweise aus dekorativen Gründen oder Sicherheitsgründen (Splitterschutz) mit einer Beschichtung versehen. So gelingt es z.B., durch eine Beschichtung die Stabilität einer dünnwandigen Glasflasche so weit zu erhöhen, daß ihre Stabilität der einer handelsüblichen Flasche entspricht. Vorteilhaft, gerade bei Pflandflaschen, ist das geringere Gewicht einer beschichteten Leichtglasflasche, wodurch sich niedrigere Transportkosten ergeben. Es sind hier aber neben der Splitterschutzwirkung weitere hohe Anforderungen zu erfüllen wie beispielsweise Abriebfestigkeit, Elastizität, Wasserbeständigkeit und Alkalibeständigkeit.

Die klare Beschichtung soll bei den häufigen Spülvorgängen einer Mehrwegflasche nicht eintrüben, ferner sollen die mechanischen Eigenschaften durch die heiße, alkalische Spülflüssigkeit nicht verschlechtert werden.

Vorteilhaft sind Systeme, die lösemittelfrei sind und einkomponentig verarbeitet werden können.

In der EP-A 25 992 und EP-A 25 994 werden Beschichtungsmassen auf Basis von NCO-Prepolymeren auf Polyesterbasis beschrieben, die lösemittelfrei mit reinem Melamin vernetzt werden. Nachteilig ist jedoch die oberhalb von 180°C liegende Einbrenntemperatur, ferner ist die Beständigkeit gegen alkalische Spülmedien nur mäßig.

Die EP-A 519 074 beschreibt ein wäßriges, zweischichtig aufzutragendes Glasbeschichtungssystem, wobei die Deckschicht im wesentlichen aus 3 Hauptkomponenten besteht: einer Polyurethan-Dispersion, einem wäßrigen Epoxid- und einem wäßrigen Melamin-Formaldehyd-Harz.

Die verwendete Polyurethan-Dispersion stellt ein handelsübliches Produkt von nicht offenbarter Zusammensetzung dar, die aber ihre geforderten Endeigenschaften erst durch wesentliche Mengen an den beiden obengenannten Zusätzen erreicht. Im Gegensatz hierzu stellt die erfindungsgemäße Glasbeschichtung ein einkomponentig verarbeitbares, ausschließlich aus PUR-Bausteinen basierendes, System dar.

Die US-P 4 280 994 beschreibt wäßrige Polyurethandispersionen auf Polyetherbasis, die aufgrund der enthaltenen freien Hydroxylgruppen und blockierten Isocyanatgruppen ein Einkomponentensystem darstellen, das thermisch nachvernetzt werden kann. Allerdings erfordert eine gute Haftung auf Glas sowie hohe Alkalibeständigkeit auch eine hohe Vernetzungsdichte, die mit den hier beschriebenen Systemen nur schwer erreichbar sind.

Höhere Vernetzungsdichten sind erreichbar, wenn OH-funktionelle PUR-Dispersionen mit wäßrigen, blockierten Polyisocyanatvernetzern kombiniert werden. Diese aus zwei Komponenten hergestellten Systeme sind einkomponentig verarbeitbar und vernetzen bei Hitzeeinwirkung. In den Beispielen der EP-A 566 953 bzw. EP-A 576 952 werden jedoch lediglich Systeme auf Polyesterbasis beschrieben, die Beständigkeit gegen Alkalien ist nur mäßig.

Schließlich beschreibt die EP-A-0 469 389 ein zweikomponentigen Beschichtungsmittel aus einem hydroxyterminiertem Polyurethan und einem Isocyanatvernetzer.

Die der Erfindung zugrundeliegende Aufgabe bestand jedoch darin, geeignete Beschichtungsmittel für Glasoberflächen, speziell Glasflaschen zur Verfügung zu stellen, die einkomponentig verarbeitbar sind und neben hervorragender Optik auch gute Haftung, hohe Abriebfestigkeit, Elastizität, Wasserbeständigkeit und Alkalibeständigkeit, besonders gegen heiße alkalische Spülmedien aufweisen.

Mit den nachstehend näher beschriebenen, erfindungsgemäß zu verwendenden Beschichtungsmitteln ist es überraschenderweise gelungen, die genannte Aufgabe zu lösen.

Gegenstand der Erfindung sind wäßrige Beschichtungsmittel auf PUR-Basis, die als Bindemittel eine Kombination aus
a) einer in Wasser löslichen oder dispergierbaren Polyolkomponente aus
   A1) 20 bis 60 Gew.-% einer Polyisocyanat-Komponente, bestehend zumindest aus 50 Gew.-% 4,4'-Diisocyanatodicyclohexylmethan und zum Rest aus anderen organischen Polyisocyanaten des Molekulargewichtsbereiches 140 bis 1500 und
   B1) 20 bis 60 Gew.-% einer Polyetherpolyolkomponente, bestehend aus einem oder verschiedenen Polyetherpolyolen des Hydroxylzahlbereichs 25 bis 350 mg KOH/g Substanz und
   C1) 2 bis 12 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und gegebenenfalls
   D1) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und/oder
   E1) 0 bis 15 Gew.-% eines oder mehrerer mehrwertiger Alkohole mit 2 bis 4 Hydroxylgruppen, Molekulargewichtsbereich 62 bis 250 und/oder
   F1) 0 bis 15 Gew.-% eines oder mehrerer (cyclo)aliphatischer Polyamine mit 2 bis 4 Aminogruppen, Molekulargewichtsbereich 60 bis 300, und/oder
   G1) 0 bis 30 Gew.-% einer oder mehrerer (cyclo)aliphatischer Polyaminopolyhydroxylverbindungen mit einer Summe von Hydroxylund Aminogruppen von 2 bis 4, Molekulargewichtsbereich 61 bis 300, und/oder
   H1) 0 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300,
   wobei sich die genannten Prozentangaben von A1) bis H1) zu 100 ergänzen, und
b) einer in Wasser löslichen oder dispergierbaren Polyisocyanatkomponente mit blockierten Isocyanatgruppen aus
   A2) 40 bis 80 Gew.-% einer Polyisocyanatkomponente auf Basis von Diisocyanaten des Molekulargewichtsbereichs von 140 bis 350 mit einem Isocyanuratgruppengehalt (berechnet als C₃N₃O₃; Molekulargewicht = 126) von 2 bis 30 Gew.-% und
   B2) 5 bis 30 Gew.-% eines oder mehrerer im Sinne der Isocyanat-Additionsreaktion monofunktioneller Blockierungsmittel für Isocyanatgruppen und
   C2) 0 bis 15 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und
   D2) 5 bis 30 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und
   E2) 0 bis 15 Gew.-% eines oder mehrerer mehrwertiger Alkohole mit 2 bis 4 Hydroxylgruppen des Molekulargewichtsbereichs von 62 bis 250 und
   F2) 0 bis 15 Gew.-% eines oder mehrerer (cyclo)aliphatischer Polyamine mit 2 bis 4 Aminogruppen des Molekulargewichtsbereichs von 60 bis 300 und
   G2) 0,5 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300,
wobei sich die genannten Prozentangaben von A2) bis G2) zu 100 ergänzen, sowie gegebenenfalls die üblichen Hilfs- und Zusatzmittel der Beschichtungstechnologie enthalten, mit der Maßgabe, daß das Äquivalentverhältnis von blockierten Isocyanatgruppen der Komponente b) zu Hydroxylgruppen der Komponente a) bei mindestens 0,8:1 liegt.

Ein weiterer Gegenstand der Erfindung ist ein Verfahren zur Herstellung der wäßrigen Beschichtungsmittel auf PUR-Basis, die als Bindemittel eine Kombination aus
a) einer in Wasser löslichen oder dispergierbaren Polyolkomponente aus
   A1) 20 bis 60 Gew.-% einer Polyisocyanat-Komponente, bestehend zumindest aus 50 Gew.-% 4,4'-Diisocyanatodicyclohexylmethan und zum Rest aus anderen organischen Polyisocyanaten des Molekulargewichtsbereiches 140 bis 1500 und
   B1) 20 bis 60 Gew.-% einer Polyetherpolyolkomponente, bestehend aus einem oder verschiedenen Polyetherpolyolen des Hydroxylzahlbereichs 25 bis 350 mg KOH/g Substanz und
   C1) 2 bis 12 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und gegebenenfalls
   D1) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und/oder
   E1) 0 bis 15 Gew.-% eines oder mehrerer mehrwertiger Alkohole mit 2 bis 4 Hydroxylgruppen, Molekulargewichtsbereich 62 bis 250 und/oder
   F1) 0 bis 15 Gew.-% eines oder mehrerer (cyclo)aliphatischer Polyamine mit 2 bis 4 Aminogruppen, Molekulargewichtsbereich 60 bis 300, und/oder
   G1) 0 bis 30 Gew.-% einer oder mehrerer (cyclo)aliphatischer Polyaminopolyhydroxylverbindungen mit einer Summe von Hydroxyl- und Aminogruppen von 2 bis 4, Molekulargewichtsbereich 61 bis 300, und/oder
   H1) 0 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300,
   wobei sich die genannten Prozentangaben von A1) bis H1) zu 100 ergänzen, und
b) einer in Wasser löslichen oder dispergierbaren Polyisocyanatkomponente mit blockierten Isocyanatgruppen aus
   A2) 40 bis 80 Gew.-% einer Polyisocyanatkomponente auf Basis von Diisocyanaten des Molekulargewichtsbereichs von 140 bis 350 mit einem Isocyanuratgruppengehalt (berechnet als C₃N₃O₃, Molekulargewicht = 126) von 2 bis 30 Gew.-% und
   B2) 5 bis 30 Gew.-% eines oder mehrerer im Sinne der Isocyanat-Additionsreaktion monofunktioneller Blockierungsmittel für Isocyanatgruppen und
   C2) 0 bis 15 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und
   D2) 5 bis 30 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und
   E2) 0 bis 15 Gew.-% eines oder mehrerer mehrwertiger Alkohole mit 2 bis 4 Hydroxylgruppen des Molekulargewichtsbereichs von 62 bis 250 und
   F2) 0 bis 15 Gew.-% eines oder mehrerer (cyclo)aliphatischer Polyamine mit 2 bis 4 Aminogruppen des Molekulargewichtsbereichs von 60 bis 300 und
   G2) 0,5 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300,
   wobei sich die genannten Prozentangaben von A2) bis G2) zu 100 ergänzen,
sowie gegebenenfalls die üblichen Hilfs- und Zusatzmittel der Beschichtungstechnologie enthalten, mit der Maßgabe, daß das Äquivalentverhältnis von blockierten Isocyanatgruppen der Komponente b) zu Hydroxylgruppen der Komponente a) bei mindestens 0,8:1 liegt, dadurch gekennzeichnet, daß man zur Herstellung der in Wasser löslichen oder dispergierbaren Polyolkomponente a)
A1) 20 bis 60 Gew.-% einer Polyisocyanat-Komponente, bestehend zumindest aus 50 Gew.-% 4,4'-Diisocyanatodicydohexylmethan und zum Rest aus anderen organischen Polyisocyanaten des Molekulargewichtsbereiches 140 bis 1500 und
B1) 20 bis 60 Gew.-% einer Polyetherpolyolkomponente, bestehend aus einem oder verschiedenen Polyetherpolyolen des Hydroxylzahlbereichs 25 bis 350 mg KOH/g Substanz und
C1) 2 bis 12 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und gegebenenfalls
D1) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und/oder
E1) 0 bis 15 Gew.-% eines oder mehrerer mehrwertiger Alkohole mit 2 bis 4 Hydroxylgruppen, Molekulargewichtsbereich 62 bis 250 und/oder
F1) 0 bis 15 Gew.-% eines oder mehrerer (cyclo)aliphatischer Polyamine mit 2 bis 4 Aminogruppen, Molekulargewichtsbereich 60 bis 300, und/oder
G1) 0 bis 30 Gew.-% einer oder mehrerer (cyclo)aliphatischer Polyaminopolyhydroxylverbindungen mit einer Summe von Hydroxyl- und Aminogruppen von 2 bis 4, Molekulargewichtsbereich 61 bis 300, und/oder
H1) 0 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300.
zur Reaktion bringt, wobei sich die genannten Prozentangaben von A1) bis H1) zu 100 ergänzen, anschließend in Wasser dispergiert und zur Herstellung der in Wasser löslichen oder dispergierbaren Polyisocyanatkomponente b) mit blockierten Isocyanatgruppen aus
A2) 40 bis 80 Gew.-% einer Polyisocyanatkomponente auf Basis von Diisocyanaten des Molekulargewichtsbereichs von 140 bis 350 mit einem Isocyanuratgruppengehalt (berechnet als C₃N₃O₃; Molekulargewicht = 126) von 2 bis 30 Gew.-% und
B2) 5 bis 30 Gew.-% eines oder mehrerer im Sinne der Isocyanat-Additionsreaktion monofunktioneller Blockierungsmittel für Isocyanatgruppen und
C2) 0 bis 15 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und
D2) 5 bis 30 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und
E2) 0 bis 15 Gew.-% eines oder mehrerer mehrwertiger Alkohole mit 2 bis 4 Hydroxylgruppen des Molekulargewichtsbereichs von 62 bis 250 und
F2) 0 bis 15 Gew.-% eines oder mehrerer (cyclo)aliphatischer Polyamine mit 2 bis 4 Aminogruppen des Molekulargewichtsbereichs von 60 bis 300 und
G2) 0,5 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300,
zur Reaktion bringt, wobei sich die genannten Prozentangaben von A2) bis G2) zu 100 ergänzen, anschließend in Wasser dispergiert und anschließend die Komponenten a) und b), gegebenenfalls unter Zusatz der genannten Hilfs- und Zusatzmittel, miteinander vermischt oder die Komponenten a) und b) in wasserfreier Form vermischt und das Gemisch in Wasser dispergiert.

Ein weiterer Gegenstand der Erfindung ist die Verwendung der Bindemittel zur Beschichtung von beliebigen Glasoberflächen, speziell Glasflaschen.

Bei der Bindemittelkomponente a) handelt es sich um in Wasser lösliche oder dispergierbare Polyhydroxylverbindungen auf Polyetherpolyurethanbasis eines aus Hydroxylgruppengehalt und Hydroxylfunktionalität berechenbaren mittleren Molekulargewichts 500 bis 100 000, vorzugsweise 1 000 bis 10 000 der an sich aus der Chemie der Polyurethanlacke bekannten Art, vorausgesetzt die Polyhydroxylverbindungen weisen einen zu ihrer Löslichkeit bzw. Dispergierbarkeit in Wasser ausreichenden Gehalt an hydrophilen Gruppierungen, insbesondere Ethylenoxideinheiten aufweisenden Polyetherketten und/oder Carboxylatgruppen auf. Grundsätzlich möglich ist allerdings auch die Verwendung von für sich allein nicht ausreichend hydrophilen Polyhydroxylverbindungen in Abmischung mit externen Emulgatoren.

Die Ausgangskomponente A1) besteht aus mindestens einem organischen Polyisocyanat des Molekulargewichtsbereichs 140 bis 1 500, vorzugsweise 168 bis 318, mit der Maßgabe, daß sie zu mindestens 50, vorzugsweise mindestens 75 und besonders bevorzugt zu 100 Gew.-% aus 4,4'-Diisocyanatocyclohexylmethan besteht.

Neben dem letztgenannten Diisocyanat kann die Komponente A1) auch weitere Polyisocyanate des genannten Molekulargewichtsbereichs enthalten. Beispielhaft genannt seien Hexamethylendiisocyanat (HDI), I-Isocyanato-3,3,5-trimethyl-5-iso-cyanatomethyl-cyclohexan (IPDI), 2,4- und/oder 2,6-Diisocyanatotoluol (TDI), 1 -Methyl 1-Methyl-2,4-diisocyanatocyclohexan und/oder 1 -Methyl-2,6-diisocyanatocyclohexan, und 4,4'-Diisocyanatodiphenylmethan (MDI). Die Polyisocyanatkomponente A1) kann auch, allerdings weniger bevorzugt, an sich bekannte Lackpolyisocyanate auf HDI-, IPDI- und/oder TDI-Basis enthalten.

Bei der Komponente B1) handelt es sich um die aus der Polyurethanchemie an sich bekannten höhermolekularen Polyhydroxylpolyether des Molekulargewichtsbereichs 300 bis 5 000, vorzugsweise 500 bis 3 000, die in der Polyurethanchemie an sich bekannten Polyether, wie z.B. die unter Verwendung von zweiwertigen Startermolekülen, wie Wasser, Ethylenglykol, Propandiol-1,2, Propandiol-1,3, Diethylenglykol, Butandiol-1,4, Hexandiol-1,6, Octandiol-1,8, Neopentylglykol, 22-Methylpropandiol-1,3, -1,3, die verschiedenen isomeren Bishydroxymethylcyclohexane. 2,2-Bis-(4-hydroxyphenyl)-propan oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, daß das resultierende Polyetherdiol maximal 10 Gew.-% an Ethylenoxideinheiten enthält.

Vorzugsweise werden solche Polyetherdiole verwendet, die ohne Mitverwendung von Ethylenoxid, d.h. insbesondere unter ausschließlicher Verwendung von Propylenoxid und Tetrahydrofuran erhalten wurden.

Neben diesen höhermolekularen difunktionellen Verbindungen kann die Komponente B1) auch tri- oder höherfunktionelle Polyhydroxylverbindungen der genannten Art, insbesondere Polyetherpolyole aufweisen, deren Molekulargewicht innerhalb der genannten Grenzen liegt, und die unter (Mit)Verwendung von höherfunktionellen Ausgangsmaterialien wie beispielsweise Trimethylolpropan, Glycerin oder Ethylendiamin erhalten worden sind.

Auch die Verwendung von Polyetherpolyaminen des genannten Molekulargewichtsbereichs, beispielsweise solchen, wie sie durch Überführung der Hydroxylgruppen der beispielhaft genannten Polyetherpolyole in primäre Aminogruppen erhalten werden, ist grundsätzlich möglich, allerdings weniger bevorzugt.

Die Komponente C1) besteht aus mindestens einer (potentiell) anionischen Verbindung mit mindestens einer gegenüber Isocyanatgruppen reaktionsfähigen Gruppe.

Vorzugsweise handelt es sich bei diesen Verbindungen um mindestens eine, vorzugsweise eine oder zwei Hydroxyl- oder Aminogruppen aufweisende Carbonsäuren oder um Salze derartiger Amino- bzw. Hydroxycarbonsäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder um Gemische derartiger Säuren. Vorzugsweise wird als Komponente C1) Dimethylolpropionsäure und/oder Hydroxypivalinsäure verwendet. Ebenfalls möglich, jedoch weniger bevorzugt, ist die Verwendung von gegebenenfalls Ethergruppen aufweisenden Sulfonatdiolen der in US-P 4 108 814 beschriebenen Art als anionische Aufbaukomponente Cl). Die freien Säuregruppen insbesondere Carboxylgruppen stellen die vorstehend genannten "potentiell anionischen" Gruppen dar, während es sich bei den durch Neutralisation mit Basen erhaltenen salzartigen Gruppen, insbesondere Carboxylatgruppen um die vorstehend angesprochenen "anionischen" Gruppen handelt.

Die gegebenenfalls mitzuverwendende Komponente D1) besteht aus mindestens einer nichtionisch-hydrophilen Verbindung, die pro Molekül eine oder zwei gegenüber Isocyanatgruppen reaktionsfähige Gruppen, insbesondere Hydroxyl - oder Aminogruppen aufweist. Die Polyetherketten dieser Verbindungen bestehen zumindest zu 80 % aus Ethylenoxideinheiten, wobei neben diesen, den gemachten Ausführungen entsprechend, auch Propylenoxideinheiten vorliegen können. Geeignete derartige nichtionisch-hydrophile Aufbaukomponenten sind beispielsweise monofunktionelle Polyethylenglykolmonoalkylether mit Molekulargewichten von 350 bis 5 000 (z.B. ®Breox 350, 550, 750 von BP Chemicals) sowie monofunktionelle Verbindungen mit einem gegenüber Isocyanatgruppen reaktionsfähigen Wasserstoffatomen mit Ethylenoxid-Einheiten aufweisenden hydrophilen Ketten wie sie z.B. in DE-A 2 651 506 beschrieben sind.

Auch als Komponente D1) geeignete nichtionisch-hydrophile Aufbaukomponenten sind die in DE-A 2 551 094 genannten Diisocyanate und/oder im Sinne der Isocyanatpolyadditionsreaktion difunktionelle Verbindungen mit gegenüber Isocyanatgruppen reaktionsfähigen Wasserstoffatomen mit seitenständigen Ethylenoxid-Einheiten aufweisenden hydrophilen Ketten.

Bei der gegebenenfalls mitzuverwendenden Komponente E1) handelt es sich um sonstige di-, tri- und/oder tetrafunktionelle Substanzen des Molekulargewichts 62 bis 250 mit Hydroxylgruppen wie z.B. Ethylenglykol, Propylenglykol, 1,4-Butandiol, 1,6-Hexandiol, Glycerin, Trimethylolpropan, Trimethylolethan, die isomeren Hexantriole oder Pentaerythrit.

Bei der gegebenenfalls mitzuverwendenden Komponente F1) handelt es sich um di-, tri- und/oder tetrafunktionelle Substanzen des Molekulargewichtsbereichs 60 bis 300 mit Aminogruppen wie z.B. Ethylendiamin, 1,2- und 1,3-Diaminopropan, 1,6-Diaminohexan, 1,3-Diarnino-2,2-dimethylpropan, Isophorondiamin, 1,3- und 1,4-Diaminohexan, 4,4'-Diamino-dicyclohexylmethan, 2,4- und/oder 2,6-Diamino-1-methyl-cyclohexan, 4,4'-Diamino-3,3'-dimethyl-dicyclohexylmethan, 1,4-Bis-(2-amino-prop-2-yl)-cyclohexan oder auch Hydrazin, Hydrazide bzw. beliebige Gemische derartiger Diamine und Hydrazine; höherfunktionelle Polyamine wie Diethylentriamin, Triethylentetramin, Dipropylentriamin, Tripropylentetramin, hydrierte Anlagerungsprodukte von Acrylnitril an aliphatische oder cycloaliphatische Diamine, vorzugsweise entsprechender Anlagerungsverbindungen einer Acrylnitrilgruppe an ein Molekül eines Diamins, z.B. Hexamethylen-propylentriamin, Tetramethylen-propylen-triamin, Isophoron-propylen-triamin, 1,4- oder 1,3-Cyclohexanpropylentriamin oder beliebige Gemische derartiger Polyamine.

Bei der Komponente G1) handelt es sich um di-, tri- und/oder tetrafunktionelle Substanzen des Molekulargewichtsbereichs 60 bis 300 mit Aminogruppen und Hydroxylgruppen wie z.B. Ethanolamin, Diethanolamin, Triethanolamin und Hydroxyethylethylendiamin.

Bei der Komponente H1) handelt es sich um mono- und/oder difunktionelle Carbonsäurehydrazide des Molekulargewichtsbereichs von 70 bis 300, wie z.B. Adipinsäuredihydrazid, Benzoesäurehydrazid, pp-Hydroxybenzoesäurehydrazid, die isomeren Terephthalsäurehydrazide, N-2,2,6,6-tetramethyl-4-piperidinyl-N-aminooxamid (®Luchem HA-R 100, Elf Atochem), 3-(4-Hydroxy-3,5-di-t-butyl-phenyl)-propionsäurehydrazid, 2-Hydroxy-3-t-butyl-5-methylphenyl-essigsäurehydrazid oder Gemische dieser Verbindungen. Andere wirksame Hydrazide sind Addukte aus cyclischen Carbonaten und Hydrazin, beispielsweise aus 1 mol Hydrazin und 1 mol Propylencarbonat oder 1 mol Hydrazin und 2 mol Propylencarbonat, wie sie in den EP-A 654 490 und EP-A 682 051 beschrieben sind. Bevorzugte Stabilisatoren sind Adipinsäurehydrazid und N-2,2,6,6-Tetramethyl-4-piperidinyl-N-aminooxamid.

Die Herstellung der OH-funktionellen Polyetherpolyurethane a) aus den Ausgangskomponenten A1) bis H1) erfolgt in an sich bekannter Weise ein- oder mehrstufig, wobei die Mengenverhältnisse der Reaktionspartner so gewählt werden, daß das Äquivalentverhältnis von Isocyanatgruppen der Komponente A1) zu gegenüber Isocyanaten reaktionsfähigen Gruppen der Komponenten B1), C1), D1), E1), F1), G1) und H1) bei 0,8:1 bis 2:1, vorzugsweise 0,95:1 bis 1,5:1 und insbesondere bei 0,95:1 bis 1,2:1 liegt.

In die Berechnung dieses Äquivalentverhältnisses gehen weder die Carboxylgruppe der Komponente C1) noch das zur Herstellung von Lösungen oder Dispersionen der Polyurethane verwendete Wasser noch das zur Neutralisation der Carboxylgruppen eingesetzte Neutralisationsmittel ein.

Die Komponente E1) wird im allgemeinen in einer Menge von 0 bis 75 Gew.-%, vorzugsweise 0 bis 70 Gew.-% bezogen auf das Gewicht der Komponente B1) verwendet.

Die Komponente D1) gelangt in einer solchen Menge zum Einsatz, daß in den letztendlich erhaltenen erfindungsgemäßen Polyurethanen 0 bis 30, vorzugsweise 0 bis 20 Gew.-% an innerhalb von end- und/oder seitenständig angeordneten Polyetherketten eingebauten Ethylenoxideinheiten vorliegen.

Die Menge der Komponente C1) und der Neutralisationsgrad der mit der Komponente C1) eingebauten Carboxylgruppen wird so bemessen, daß in dem letztendlich erhaltenen Polyurethan 0,1 bis 120, vorzugsweise 1 bis 80 Milliäquivalente pro 100 g Feststoff an Carboxylatgruppen vorliegen, wobei die Gesamtmenge der zuletzt genannten Ethylenoxideinheiten und dieser Carboxylatgruppen innerhalb der genannten Bereiche so bemessen sein muß, daß die Löslichkeit bzw. Dispergierbarkeit der Polyurethane in Wasser gewährleistet ist.

Im übrigen werden Art und Mengenverhältnisse der Ausgangskomponenten A1) bis H1) so bemessen, daß nach erfolgter Umsetzung dieser Ausgangsmaterialien in den resultierenden Polyurethanen maximal bis zu 15, vorzugsweise bis maximal 10 Gew.-%, bezogen auf Festkörper, an freien, nicht umgesetzten Hydroxylgruppen vorliegen.

Die Umsetzung der Ausgangskomponenten A1) bis H1) kann sowohl ein- als auch mehrstufig durchgeführt werden. Selbstverständlich kann auch ein gegenüber Isocyanätgruppen inertes Lösungsmittel mitverwendet werden, so daß die Umsetzungsprodukte letztendlich in Form einer Lösung in einem derartigen Lösungsmittel vorliegen. In diesem Zusammenhang bedeutet "Lösung" sowohl eine echte Lösung als auch eine Wasser-in-Öl-Emulsion, die dann entstehen kann, wenn beispielsweise einzelne der Aufbaukomponenten in Form von wäßrigen Lösungen zum Einsatz gelangen. Geeignete Lösungsmittel sind beispielsweise Aceton, Methylethylketon, N-Methylpyrrolidon oder beliebige Gemische dieser und auch anderer Lösungsmittel. Die Menge dieser Lösungsmittel wird im allgemeinen so bemessen, daß mindestens 10 gew.-%ige Lösungen der Umsetzungsprodukte aus den Ausgangskomponenten A1) bis H1) in dem Lösungsmittel anfallen.

Die Herstellung der OH-funktionellen Polyetherpolyurethane a) erfolgt in Abwesenheit oder Gegenwart von Katalysatoren. Gelangen Katalysatoren zum Einsatz, so sind dies die in der Polyurethanchemie üblicherweise verwendeten Katalysatoren wie z.B. tertiäre Amine wie z.B. Triethylamin, Zinnverbindungen wie z.B. Zinn-II-octoat, Dibutylzinnoxid, Dibutylyzinndilaurat und andere gebräuchliche Katalysatoren.

Zur Herstellung der erfindungsgemäßen Polyurethanpolyhamstoff-Dispersionen bzw. -Lösungen eignen sich die in der Literatur beschriebenen Herstellungsverfahren (D. Dieterich in: Houben-Weyl, Methoden der organischen Chemie, 4. Aufl., Band E 20, S. 1659 (1987), beispielsweise das Prepolymer-Misch-Verfahren oder das Aceton-Verfahren).

Die Einführung der Hydroxylgruppen gelingt durch Umsetzung des NCO-Prepolymers mit überschüssigem E1) oder G1). Wird in einem Lösungsmittel gearbeitet, so können die genannten Komponenten dem Prepolymer zugesetzt werden. Bei einem lösemittelfreien Schmelzverfahren, bei dem bestenfalls geringe Mengen an Colöser mitverwendet werden, ist dies nur möglich, wenn lediglich OH-funktionelle Bausteine zum Einsatz kommen, bei Verwendung von Aminogruppen tragenden Komponenten sind diese im Dispergierwasser oder einem Teil des Dispergierwassers, gegebenenfalls unter Zusatz eines Colösers langsam zuzudosieren, um die Exothermie der Reaktion kontrolliert ablaufen zu lassen.

Die Zugabe der bis zur zumindest teilweisen Neutralisation der Carboxylgruppen erforderlichen Base kann vor, während oder im Anschluß an die Wasserzugabe erfolgen.

Geeignete Basen sind z.B. Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Triisopropanolamin, 2-Diethylamino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid. Bevorzugte Neutralisationsmittel sind Ammoniak und Dimethylethanolamin.

Im Anschluß an die Zugabe des als Lösungsmittel bzw. als Dispergiermedium dienenden Wassers, dessen Menge im übrigen so bemessen wird, daß 10- bis 60-, vorzugsweise 20- bis 45 gew.-%ige Lösungen oder Dispersionen resultieren, erfolgt gegebenenfalls eine destillative Entfernung des verwendeten Hilfslösungsmittels.

Letztendlich werden somit die erfindungsgemäßen Polyurethane in Form von wäßrigen Lösungen oder in Form von wäßrigen Dispersionen erhalten.

Die Frage, ob es sich um wäßrige Lösungen oder Dispersionen handelt, ist in erster Linie von der Konzentration der hydrophilen Segmente abhängig.

Beim erfindungsgemäßen Verfahren können ohne weiteres auch höhere Mengen an tri- und polyfunktionellen Aufbaukomponenten, insbesondere Vernetzungsmitteln E1), F1) und/oder G1) mitverwendet werden, so daß nicht nur Polyurethane mit im wesentlichen linearer Struktur, sondern auch stark verzweigte Polyurethane erhalten werden können. Die wäßrigen Lösungen und Dispersionen a) sind frostund lagerstabil und mit Wasser beliebig verdünnbar.

Bei der Vernetzerkomponente b) handelt es sich um in Wasser lösliche oder dispergierbare blockierte Polyisocyanate mit einem Gehalt an blockierten Isocyanatgruppen (berechnet als NCO, Molekulargewicht = 42) von 5 bis 11 Gew.-%.

Die Ausgangskomponente A2) ist ein organisches Polyisocyanat auf Basis von Diisocyanaten des Molekulargewichts von 140 bis 350 mit einem Isocyanuratgruppengehalt (berechnet als C₃N₃O₃, Molekulargewicht = 126) von 2 bis 30 Gew.-%, vorzugsweise mindestens 5 Gew.-%. Als Diisocyanate können 4,4'-Diisocyanato-dicyclohexylmethan (®Desmodur W, Fa. Bayer AG), 1-Isocyanato-3,3,5-trimethyl-5-isocyanatomethyl-cyclohexan (IPDI) und/oder 1,6-Diisocyanatohexan (HDI) oder Gemische solcher Polyisocyanate verwendet werden. Die Herstellung der Polyisocyanat-Komponente A2) aus den erwähnten Diisocyanaten erfolgt nach literaturbekannten Methoden, wie sie beispielsweise von Laas, H.-J. et al in J. prakt. Chem. 336 (1994) und in EP-A 649 866 beschrieben sind.

Als monofunktionelle Blockierungsmittel B2) werden Oxime und/oder Pyrazole eingesetzt. Bevorzugte Blockierungsmittel sind Butanonoxim und/oder 3,5-Dimethylpyrazol.

Die Komponente C2) besteht aus mindestens einer (potentiell) anionischen Verbindung mit mindestens einer gegenüber Isocyanatgruppen reaktionsfähigen Gruppe.

Vorzugsweise handelt es sich bei diesen Verbindungen um mindestens eine, bevorzugt eine oder zwei Hydroxylgruppen aufweisende, Carbonsäure oder um Salze derartiger Hydroxycarbonsäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder Gemische derartiger Säuren. Besonders bevorzugt wird als Komponente C2) Dimethylolpropionsäure und/oder Hydroxypivalinsäure verwendet. Die freien Säuregruppen, insbesondere Carboxylgruppen, stellen die vorstehend genannten "potentiell anionischen" Gruppen dar, während es sich bei den durch Neutralisation mit Basen erhaltenen salzartigen Gruppen, insbesondere Carboxylatgruppen, um die vorstehend angesprochenen "anionischen" Gruppen handelt.

Die Komponente D2) besteht aus mindestens einer nichtionisch-hydrophilen Verbindung, die pro Molekül eine oder zwei gegenüber Isocyanatgruppen reaktionsfähige Gruppen, insbesondere Hydroxylgruppen aufweist. Die Polyetherketten dieser Verbindung bestehen zumindest zu 80 Gew.-%, vorzugsweise zu 100 Gew.-% aus Ethylenoxideinheiten, wobei neben diesen, den gemachten Ausführungen entsprechend, auch Propylenoxideinheiten vorliegen können. Geeignete derartige nichtionisch-hydrophile Aufbaukomponenten sind beispielsweise monofunktionelle Polyethylenglykolmonoalkylether mit Molekulargewichten von 350 bis 5 000 (z.B. ®Breox 350, 550, 750, Fa. BP Chemicals). Vorzugsweise liegt das Molekulargewicht zwischen 600 und 900.

Bei der Komponente E2) handelt es sich um di-, tri- und/oder tetrafunktionelle Substanzen des Molekulargewichts 62 bis 250 mit Hydroxylgruppen, wie z.B. Ethylenglykol, Propylenglykol, 1,4-Butandiol, 1,6-Hexandiol, Glycerin, Trimethylolethan, Trimethylolpropan, die isomeren Hexantriole, Pentaerythrit oder Gemische dieser Verbindungen.

Als Komponente F2) kommen di-, tri- und/oder tetrafunktionelle Substanzen des Molekulargewichtsbereichs 60 bis 300 mit Aminogruppen in Betracht, wie z.B. Ethylendiamin, 1,2- und 1,3-Diaminopropan, 1,6-Diaminohexan, 1,3-Diamino-2,2-dimethylpropan, 1 -Amino-3,3,5-trimethyl-5-aminomethyl-cyclohexan (IPDA), 1,3 - und 1,4-Diaminohexan, 4,4'-Diamino-dicyclohexylmethan, 2,4- und 2,6-Diamino-1-methyl-cyclohexan, 4,4'-Diamino-3,3'-dimethyl-dicyclohexylmethan, 1,4-Bis-(2-amino-prop-2-yl)-cyclohexan oder Gemische dieser Verbindungen.

Bei der Komponente G2) handelt es sich um mono- und/oder difunktionelle Carbonsäurehydrazide des Molekulargewichtsbereichs von 70 bis 300, wie z.B. Adipinsäuredihydrazid, Benzoesäurehydrazid, p-Hydroxybenzoesäurehydrazid, die isomeren Terephthalsäurehydrazide, N-2,2,6,6-tetramethyl-4-piperidinyl-N-aminooxamid (®Luchem HA-R 100, Elf Atochem), 3-(4-Hydroxy-3,5-di-t-butyl-phenyl)-propionsäurehydrazid, 2-Hydroxy-3-t-butyl-5-methylphenyl-essigsäurehydrazid oder Gemische dieser Verbindungen. Andere wirksame Hydrazide sind Addukte aus cyclischen Carbonaten und Hydrazin, beispielsweise aus 1 mol Hydrazin und 1 mol Propylencarbonat oder 1 mol Hydrazin und 2 mol Propylencarbonat, wie sie in den EP-A 654 490 und EP-A 682 051 beschrieben sind. Bevorzugte Stabilisatoren sind Adipinsäurehydrazid und N-2,2,6,6-Tetramethyl-4-piperidinyl-N-aminooxamid.

Die Herstellung der blockierten Polyisocyanatkomponente b) aus den Ausgangskomponenten A2) bis G2) erfolgt mehrstufig, wobei die Mengenverhältnisse der Reaktionspartner so gewählt werden, daß das Äquivalentverhältnis von Isocyanatgruppen der Komponente A2) zu gegenüber Isocyanaten reaktionsfähigen Gruppen der Komponenten B2), C2), D2), E2), F2) und G2) bei 1:0,8 bis 1:1,2, vorzugsweise bei 1:0,9 bis 1:1 liegt.

In die Berechnung dieses Äquivalentverhältnisses gehen weder die Carboxylgruppe der Komponente C2) noch das zur Herstellung von Lösungen oder Dispersionen der Polyurethane verwendete Wasser oder Lösemittel noch das zur Neutralisation der Carboxylgruppen eingesetzte Neutralisationsmittel ein.

Die Komponente D2) gelangt in einer solchen Menge zum Einsatz, daß in den letztendlich erhaltenen erfindungsgemäßen blockierten Polyisocyanaten 0,1 bis 10, vorzugsweise 0,5 bis 3 Gew.-% an innerhalb von end- und/oder seitenständig angeordneten Polyetherketten eingebauten Ethylenoxideinheiten (berechnet als C₂H₄O, Molekulargewicht = 44) vorliegen.

Die Menge der Komponente C2) wird so bemessen, daß in dem letztendlich erhaltenen blockierten Polyisocyanat 0,1 bis 1,5, vorzugsweise 0,5 bis 0,7 Gew.-% an chemisch fixierten Carboxylgruppen (berechnet als COOH, Molekulargewicht = 45) vorliegen, wobei die Gesamtmenge der zuletzt genannten Ethylenoxideinheiten und dieser Carboxylgruppen innerhalb der genannten Bereiche so bemessen sein muß, daß die Löslichkeit bzw. Dispergierbarkeit der blockierten Polyisocyanate in Wasser gewährleistet ist.

Die Komponente G2) gelangt in einer solchen Menge zum Einsatz, daß in den letztendlich erhaltenen blockierten Polyisocyanaten 0,1 bis 3,0, vorzugsweise 0,1 bis 1,0 Gew.-% an chemisch gebundenen Hydrazidgruppen (berechnet als HN-NH, Molekulargewicht = 30) vorliegen.

In der ersten Stufe des Herstellungsverfahrens werden die Hydrophilierungsmittel C2) und D2) vorgelegt und bei einer Temperatur von 80 bis 100°C, vorzugsweise bei 90°C, mit der Polyisocyanatkomponente A2) umgesetzt bis die Hydrophilierungsmittel an das Polyisocyanat gebunden sind.

Anschließend wird das Reaktionsgemisch auf 70°C abgekühlt und das Blockierungsmittel B2) zudosiert bis der theoretisch berechnete NCO-Wert erreicht wird. Die Temperatur sollte während der Umsetzung 80°C nicht übersteigen.

Der Einbau der Kettenverlängerungsmittel E2) und F2) und der Stabilisierungskomponente G2) kann vor oder während des Dispergiervorgangs erfolgen. Vorzugsweise werden die Komponenten E2), F2) und G2) in Wasser gelöst und das Reaktionsgemisch in dieser Lösung unter gutem Rühren dispergiert Die Menge des als Dispergiermedium verwendeten Wassers wird so bemessen, daß 20- bis 50 gew.-%ige, vorzugsweise 30- bis 40 %ige Lösungen oder Dispersionen resultieren.

Die Zugabe der bis zur zumindest teilweisen Neutralisation der Carboxylgruppen erforderlichen Base kann vor, während oder nach dem Dispergierschritt erfolgen. Geeignete Basen sind z.B. Ammoniak, N-Methylmorpholin, Dimethylisopropanolamin, Triethylamin, Dimethylethanolamin, Methyldiethanolamin, Triethanolamin, Morpholin, Tripropylamin, Ethanol, Triisopropanolamin, 2-Diethylamino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid. Bevorzugtes Neutralisationsmittel ist Dimethylethanolamin.

Die Herstellung der erfindungsgemäßen Beschichtungsmittel erfolgt durch Abmischung der in Wasser löslichen oder dispergierbaren Polyolkomponente a) mit der in Wasser löslichen oder dispergierbaren blockierten Polyisocyanatkomponente b) auf an sich bekannte Art. Es besteht die Möglichkeit, die in Wasser dispergierten Komponenten a) und b) zu vermischen oder die Komponenten a) und b) in wasserfreier Form zu vermischen und anschließend gemeinsam zu dispergieren.

### Beispiele

In den nachfolgenden Beispielen beziehen sich alle Prozentangaben auf Gewichtsprozente. Alle Angaben in "Teilen" beziehen sich auf Gewichtsteile.

### Beispiel 1 (erfindungsgemäß)

### Herstellung einer erfindungsgemäßen wäßrigen Polyolkomponente

200 Teile eines auf Propandiol gestarteten Propylenoxidpolyethers der OH-Zahl 112 werden mit 40,2 Teilen 2,2-Dimethylolpropionsäure vermischt, bei 60°C mit 301,3 Teilen 4,4'-Diisocyanatodicyclohexylmethan (®Desmodur W der Bayer AG) versetzt und bei 90°C so lange umgesetzt, bis der NCO-Gehalt des resultierenden NCO-Prepolymeren auf 10,1 % gefallen ist. Bei 90°C werden 13,4 Teile Trimethylolpropan und 165,6 Teile Aceton zugegeben, wobei sich die Reaktionsmischung auf ca. 70°C abkühlt. Bei Rückfluß wird gerührt, bis der NCO-Gehalt auf 5,5 % gefallen ist. Dann wird das Prepolymer in 203,6 Teilen Aceton gelöst.

Bei 50°C wird über 20 Minuten eine Lösung aus 79,3 Teilen Diethanolamin und 9,8 Teilen Hydroxyethylethylendiamin in 248,0 Teilen entmineralisiertem Wasser zugetropft. Anschließend gibt man 20,0 Teile N,NN,N-Dimethylethanolamin zu, läßt 2 Minuten nachrühren und dispergiert mit 1174 Teilen entmineralisiertem Wasser innerhalb von 20 Minuten. Das Aceton wird nun im Vakuum abdestilliert. Nach Erreichen eines Acetongehaltes von <1 % wird die Dispersion auf einem Feststoffgehalt von 32 % eingestellt.

### Beispiel 2 (erfindungsgemäß)

### Herstellung eines erfindungsgemäßen wäßrigen blockierten Polyisocyanats

Zur Herstellung des Desmodur WW-Allophanat/Trimerisats wird gemäß EP-A 649 866 verfahren. Als Katalysator wird eine 4,4 Gew.-%ige Lösung von N,N,N-Trimethyl-N-benzylammoniumhydroxid in n-Butanol verwendet (Katalysatorlösung in Beispiel 1 der EP-A 649 866).

1167 g Desmodur W werden mit 33 g n-Butanol versetzt und 1 Stunde bei 90°C gerührt. Nach Beendigung der Urethanisierung versetzt man bei 90°C mit ca. 4 g der Katalysatorlösung. Wenn die Reaktionsmischung einen NiO-Gehalt von 25,6 % erreicht hat, stoppt man durch Zugabe von 0,3 g einer 25%igen Lösung von Dibutylphosphat in Desmodur W ab. Überschüssiges monomeres Desmodur W wird durch Dünnschichtdestillation entfernt. Das isolierte Festharz wird 70%ig in MPA/Xylol (1:1) gelöst und man erhält ein Produkt mit folgenden Kenndaten:

| | |
|---|---|
| Festkörper | 70 % |
| NCO-Gehalt | 8,63 % |
| Viskosität | 300 mPas (23°C) |
| monomeres Desmodur W | 0,20 % |

### Ansatz

| | |
|---|---|
| 486,67 Teile (1,00 val) | eines Lackpolyisocyanats auf Basis von 4,4'-Diisocyanato-dicyclohexylmethan, hergestellt gemäß EP-A 649 866 als 70 %ige Lösung in Methoxypropylacetat/Xylol (1:1) mit einem NCO-Gehalt (bezogen auf die Lösung) von 8,63 % und einer Viskosität (bezogen auf die Lösung, gemessen bei 23°C) von ca. 300 mPa.s |
| 75,00 Teile (0,10 val) | eines monofunktionellen Polyethylenoxidalkohols mit einem mittleren Molekulargewicht von 750 (®Carbowax 750, Fa. Union Carbide) |
| 69,70 Teile (0,80 val) | Butanonoxim |
| 2,55 Teile (0,03 val) | 1-Amino-3,3,5-trimethyl-5-aminomethyl-cyclohexan (IPDA) |
| 2,61 Teile (0,03 val) | Adipinsäuredihydrazid (ASDH) |
| 764,80 Teile | entionisiertes Wasser |

### Durchführung

In einer Standard-Rührapparatur werden 75,00 Teile®Carbowax 750 vorgelegt und auf 90°C erhitzt. Unter Rühren werden zügig 486,67 Teile des obengenannten Polyisocyanats hinzugegeben. Man rührt bei 90°C bis ein NCO-Wert von 6,28 erreicht ist. Anschließend wird das Reaktionsgemisch auf 70°C abgekühlt und 69,70 Teile Butanonoxim innerhalb von 30 Minuten so zudosiert, daß eine Temperatur von 80°C nicht überschritten wird. Beim Erreichen eines NCO-Wertes von 0,25 % wird das auf 70°C abgekühlte Reaktionsgemisch durch Überführung in eine Lösung von 2,55 Teilen IPDA und 2,61 Teilen ASDH in 764,80 Teilen entionisiertem Wasser innerhalb von 30 Minuten unter gutem Rühren dispergiert. Man erhält eine milchige Dispersion mit einem Festkörper von 35 %, einem blockierten NCO-Gehalt von 2,40 % und einer Auslaufzeit von 14 s (DIN 4/23°C).

### Beispiel 3 (erfindungsgemäß)

### Herstellung des Beschichtungssystems

1265 Teile der Polyolkomponente aus Beispiel 1 werden mit 1750 Teilen der Vernetzerkomponente aus Beispiel 2 vermischt Man gibt 376 Teile entmineralisiertes Wasser, 32,4 Teile Fluorid FC 170 (Verlaufmittel der Fa. 3 M, USA) und 168,8 Teile Dipropylenglykol zu und rührt, bis eine homogene Mischung entstanden ist.

Mittels Luftdruckspritzen (Luftdruck 4 bis 5 bar) wird auf eine mit heißem Wasser abgespülte und anschließend gut abgetrocknete Glasplatte ein Naßfilm mit einer Schichtstärke von 130 bis 150 µm aufgetragen. Der Film wird 7 Minuten bei 120°C vorgetrocknet, anschließend 30 Minuten bei 140°C eingebrannt.

Es entsteht ein klarer, nicht vergilbter Lackfilm mit sehr gutem Verlauf und sehr guter Optik.

### Prüfergebnisse

| | |
|---|---|
| Pendelhärte (Bestimmung gemäß DIN 53 157) | 175 s |
| Zugfestigkeit (Bestimmung gemäß DIN 53 455) | 33,4 N/mm |
| Abrieb (Taber) (Bestimmung gemäß ASTM D 4060) | 30 mg |
| Anlösbarkeit | |

Geprüft wurde die Beständigkeit gegen verschiedene Lösemittel bei 5 Minuten Einwirkung eines getränkten Wattebausches auf die Lackoberfläche. Bewertungsskala 0 (unverändert) bis 5 (zerstört).

| | |
|---|---|
| Xylol | 0 unverändert, ohne Befund |
| 1-Methoxypropylacetat-2 | 0 unverändert, ohne Befund |
| Ethylacetat | 0 unverändert, ohne Befund |
| Aceton | 1 Spur verändert (nur sichtbare Veränderung) |

Haftung nach Belastungstest (1 Std. NaOH-Lösung 4 %ig, 80°C):
Am Kreuzschnitt war keine Veränderung erkennbar.

QUV-Natronlaugetest (Bestimmung gemäß ASTM G 5377):
Die beschichtete Glasplatte wurde bei 50°C 9 Std. einer UV-Strahlung von 275 nm ausgesetzt, anschließend 3 Std. einer Betauung bei 45°C. Danach wurde die Glasplatte mit Wasser abgespült, 10 Minuten bei 80°C in 2 %iger NaOH-Lösung gelagert und auf 50°C abgekühlt. Dieser Vorgang wird so oft wiederholt, bis die Lackoberfläche zerstört ist.

Die geprüfte Beschichtung war in diesem Test 14 Tage unverändert.
Dehnung(Bestimmung gemäß DIN 53 455): 5,8 %
Überbrennfestigkeit:
   Selbst bei den Einbrennbedingungen 30 Min. 170°C bleiben die Eigenschaften des Beschichtungssystems unverändert, auch eine Vergilbung trat nicht auf.
Splitterschutz:
   Bei einem Fall des Prüfkörpers aus 1 m Höhe auf eine Betonoberfläche hielt die Beschichtung den zersplitterten Prüfkörper zusammen, die Splitterschutzwirkung ist damit gegeben.

## Patentansprüche

1. Wässrige Beschichtungsmittel auf PUR-Basis, die als Bindemittel eine Kombination aus
a) einer in Wasser löslichen oder dispergierbaren Polyolkomponente aus
A1) 20 bis 60 Gew.-% einer Polyisocyanat-Komponente, bestehend zumindest aus 50 Gew.-% 4,4'-Diisocyanatodicyclohexylmethan und zum Rest aus anderen organischen Polyisocyanaten des Molekulargewichtsbereiches 140 bis 1500 und
B1) 20 bis 60 Gew.-% einer Polyetherpolyolkomponente, bestehend aus einem oder verschiedenen Polyetherpolyolen des Hydroxylzahlbereichs 25 bis 350 mg KOH/g Substanz und
C1) 2 bis 12 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und gegebenenfalls
D1) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und/oder
E1) 0 bis 15 Gew.-% eines oder mehrerer mehrwertiger Alkohole mit 2 bis 4 Hydroxylgruppen, Molekulargewichtsbereich 62 bis 250 und/oder
F1) 0 bis 15 Gew.-% eines oder mehrerer (cyclo)aliphatischer Polyamine mit 2 bis 4 Aminogruppen, Molekulargewichtsbereich 60 bis 300, und/oder
G1) 0 bis 30 Gew.-% einer oder mehrerer (cyclo)aliphatischer Polyaminopolyhydroxylverbindungen mit einer Summe von Hydroxyl- und Aminogruppen von 2 bis 4, Molekulargewichtsbereich 61 bis 300, und/oder
H1) 0 bis 15 Gew.-% einer oder mehreier im Sinne der Isocyanat-Additionsreaktion mono- oder difunktioneller Stabilisierungskomponenten mit 1 bis 2 Hydrazidgruppen des Molekulargewichtsbereichs von 70 bis 300,
wobei sich die genannten Prozentangaben von A1) bis H1) zu 100 ergänzen, und
b) einer in Wasser löslichen oder dispergierbaren Polyisocyanatkomponente mit blockierten Isocyanatgruppen aus
A2) 40 bis 80 Gew.-% einer Polyisocyanatkomponente auf Basis von Diisocyanaten des Molekulargewichtsbereichs von 140 bis 350 mit einem Isocyanuratgruppengehalt (berechnet als C₃N₃O₃; Molekulargewicht =126) von 2 bis 30 Gew.-% und
B2) 5 bis 30 Gew.-% eines oder mehrerer im Sinne der Isocyanat-Additionsreaktion monofunktioneller Blockierungsmittel für Isocyanatgruppen ausgwählt aus der Gruppe der Oxime und/oder Pyrazole und
C2) 0 bis 15 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und
D2) 5 bis 30 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und
E2) 0 bis 15 Gew.-% eines oder mehrerer mehrwertiger Alkohole mit 2 bis 4 Hydroxylgruppen des Molekulargewichtsbereichs von 62 bis 250 und
F2) 0 bis 15 Gew.-% eines oder mehrerer (cyclo)aliphatischer Polyamine mit 2 bis 4 Aminogruppen des Molekulargewichtsbereichs von 60 bis 300 und
G2) 0,5 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300,
wobei sich die genannten Prozentangaben von A2) bis G2) zu 100 ergänzen,
sowie gegebenenfalls die üblichen Hilfe- und Zusatzmitteln der Beschichtungstechnologie enthalten, mit der Maßgabe, dass das Äquivalentverhältnis von blockierten Isocyanatgruppen der Komponente b) zu Hydroxylgruppen der Komponente a) bei mindestens 0,8:1 liegt.

2. Verfahren zur Herstellung wässriger Beschichtungsmittel gemäß Anspruch 1, **dadurch gekennzeichnet, dass** man zur Herstellung der in Wasser löslichen oder dispergierbaren Polyolkomponente a)
A1) 20 bis 60 Gew.-% einer Polyisocyanat-Komponente, bestehend zumindest aus 50 Gew.-% 4,4'-Diisocyanatodicyclohexylmethan und zum Rest aus anderen organischen Polyisocyanaten des Molekulargewichtsbereiches 140 bis 1500 und
B 1) 20 bis 60 Gew.-% einer Polyetherpolyolkomponente, bestehend aus einem oder verschiedenen Polyetherpolyolen des Hydroxylzahlbereichs 25 bis 350 mg KOH/g Substanz und
C1) 2 bis 12 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und gegebenenfalls
D1) 0 bis 12 Gew.-% einer nichtionisch hydrophilen Aufbaukomponente, bestehend aus mindestens einer im Sinne der Isocyanat-Additionsreaktion mono- oder difimktionellen, mindestens eine hydrophile Polyetherkette aufweisenden Verbindung und/oder
E1 0 bis 15 Gew.-% eines oder mehrerer mehrwertiger Alkohole mit 2 bis 4 Hydroxylgruppen, Molekulargewichtsbereich 62 bis 250 und/oder
F1) 0 bis 15 Gew.-% eines oder mehrerer (cyclo)aliphatischer Polyamine mit 2 bis 4 Aminogruppen, Molekulargewichtsbereich 60 bis 300, und/oder
G1) 0 bis 30 Gew.-% einer oder mehrerer (cyclo)aliphatischer Polyaminopolyhydroxylverbindungen mit einer Summe von Hydroxyl- und Aminogruppen von 2 bis 4, Molekulargewichtsbereich 61 bis 300, und/oder
H1) 0 bis 15 Gew.-% einer oder mehrerer im Sinne der Isocyanat-Additionsreaktion mono- oder difünkdone Stabilisierungskomponenten mit 1 bis 2 Hydrazidgruppen des Molekulargewichtsbereichs von 70 bis 300,
zur Reaktion bringt, wobei sich die genannten Prozentangaben von A1) bis H1) zu 100 ergänzen, anschließend in Wasser dispergiert und zur Herstellung der in Wasser löslichen oder dispergierbaren Polyisocyanatkomponente b) mit blockierten Isocyanatgruppen
A2) 40 bis 80 Gew.-% einer Polyisocyanatkomponente auf Basis von Düsocyanaten des Molekulargewichtsbereichs von 140 bis 350 mit einem Isocyanuratgruppengehalt (berechnet als C₃N₃O₃; Molekulargewicht = 126) von 2 bis 30 Gew.-% und
B2) 5 bis 30 Gew.-% eines oder mehrerer im Sinne der Isocyanat-Additionsreaktion monofunktioneller Blockierungsmittel für Isocyanatgruppen ausgewählt aus der Gruppe der Oxime und/oder Pyrazole und
C2) 0 bis 15 Gew.-% einer (potentiell) anionischen Aufbaukomponente aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und
D2) 5 bis 30 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und
E2) 0 bis 15 Gew.-% eines oder mehrerer mehrwertiger Alkohole mit 2 bis 4 Hydroxylgruppen des Molekulargewichtsbereichs von 62 bis 250 und
F2) 0 bis 15 Gew.-% eines oder mehrerer (cyclo)aliphatischer Polyamine mit 2 bis 4 Aminogruppen des Molekulargewichtsbereichs von 60 bis 300 und
G2) 0,5 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300,
zur Reaktion bringt, wobei sich die genannten Prozentangaben von A2) bis G2) zu 100 ergänzen, anschließend in Wasser dispergiert und anschließend die Komponenten a) und b) gegebenenfalls unter Zusatz der genannten Hilfe- und Zusatzmittel miteinander vermischt oder die Komponenten a) und b) in wasserfreier Form vermischt und das Gemisch in Wasser dispergiert.

3. Verwendung der Bindemittel nach Anspruch 1 zur Beschichtung von Glasoberflächen.

4. Verwendung der Bindemittel nach Anspruch 1 zur Beschichtung von Glasflaschen.

## Claims

1. Aqueous coating compositions based on PU, comprising as binder a combination of
a) a polyol component which is dispersible or soluble in water, formed from
A1) 20 to 60% by weight of a polyisocyanate component consisting at least of 50% by weight of 4,4'-diisocyanatodicyclohexylmethane and, for the remainder, of other organic polyisocyanates having a molecular weight of 140 to 1500 and
B1) 20 to 60% by weight of a polyether polyol component consisting of one or different polyether polyols having a hydroxyl number of 25 to 350 mg KOH/g solids and
C1) 2 to 12% by weight of an anionic or potentially anionic synthesis component comprising at least one compound having at least one group which is reactive towards NCO groups and at least one group capable of salt formation, which may optionally be present in at least partly neutralized form, and if desired
D1) 0 to 12% by weight of a nonionic hydrophilic synthesis component consisting of at least one compound which is mono- or difunctional for the purposes of the isocyanate addition reaction and has at least one hydrophilic polyether chain, and/or
E1) 0 to 15% by weight of one or more polyhydric alcohols having 2 to 4 hydroxyl groups and a molecular weight of 62 to 250 and/or
F1) 0 to 15% by weight of one or more (cyclo)aliphatic polyamines having 2 to 4 amino groups and a molecular weight of 60 to 300, and/or
G1) 0 to 30% by weight of one or more (cyclo)aliphatic polyaminopolyhydroxy compounds having a total of hydroxyl and amino groups of 2 to 4 and a molecular weight of 61 to 300, and/or
H1) 0 to 15% by weight of one or more stabilizing components which are mono- or difunctional for the purposes of the isocyanate addition reaction and have 1 to 2 hydrazide groups and a molecular weight of 70 to 300,
where the stated percentages of A1) to H1) add up to 100, and
b) a polyisocyanate component which is dispersible or soluble in water, contains blocked isocyanate groups and is formed from
A2) 40 to 80% by weight of a polyisocyanate component based on diisocyanates having a molecular weight of 140 to 350, the component having an isocyanurate group content (calculated as C₃N₃O₃; molecular weight = 126) of 2 to 30% by weight, and
B2) 5 to 30% by weight of one or more isocyanate group blocking agents which are monofunctional for the purposes of the isocyanate addition reaction and are selected from the group of the oximes and/or pyrazoles, and
C2) 0 to 15% by weight of an anionic or potentially anionic synthesis component comprising at least one compound having at least one group which is reactive towards NCO groups and at least one group capable of salt formation, which may optionally be present in at least partly neutralized form, and
D2) 5 to 30% by weight of a nonionic hydrophilic synthesis component consisting of at least one compound which is mono- or difunctional for the purposes of the isocyanate addition reaction and has at least one hydrophilic polyether chain, and
E2) 0 to 15% by weight of one or more polyhydric alcohols having 2 to 4 hydroxyl groups and a molecular weight of 62 to 250, and
F2) 0 to 15% by weight of one or more (cyclo)aliphatic polyamines having 2 to 4 amino groups and a molecular weight of 60 to 300, and
G2) 0.5 to 15% by weight of one or more stabilizing components which are mono- or difunctional for the purposes of the isocyanate addition reaction and have 1 to 2 hydrazide groups and a molecular weight of 70 to 300,
where the stated percentages A2) to G2) add up to 100,
and optionally the customary auxiliaries and additives of coating technology, with the proviso that the equivalents ratio of blocked isocyanate groups of component b) to hydroxyl groups of component a) is at least 0.8:1.

2. Process for preparing aqueous coating compositions according to Claim 1, **characterized in that** to prepare the polyol component a) which is dispersible or soluble in water
A1) 20 to 60% by weight of a polyisocyanate component consisting at least of 50% by weight of 4,4'-diisocyanatodicyclohexylmethane and, for the remainder, of other organic polyisocyanates having a molecular weight of 140 to 1500 and
B1) 20 to 60% by weight of a polyether polyol component consisting of one or different polyether polyols having a hydroxyl number of 25 to 350 mg KOH/g solids and
C1) 2 to 12% by weight of an anionic or potentially anionic synthesis component comprising at least one compound having at least one group which is reactive towards NCO groups and at least one group capable of salt formation, which may optionally be present in at least partly neutralized form, and if desired
D1) 0 to 12% by weight of a nonionic hydrophilic synthesis component consisting of at least one compound which is mono- or difunctional for the purposes of the isocyanate addition reaction and has at least one hydrophilic polyether chain, and/or
E1) 0 to 15% by weight of one or more polyhydric alcohols having 2 to 4 hydroxyl groups and a molecular weight of 62 to 250 and/or
F1) 0 to 15% by weight of one or more (cyclo)aliphatic polyamines having 2 to 4 amino groups and a molecular weight of 60 to 300, and/or
G1) 0 to 30% by weight of one or more (cyclo)aliphatic polyaminopolyhydroxyl compounds having a total of hydroxyl and amino groups of 2 to 4 and a molecular weight of 61 to 300, and/or
H1) 0 to 15% by weight of one or more stabilizing components which are mono- or difunctional for the purposes of the isocyanate addition reaction and have 1 to 2 hydrazide groups and a molecular weight of 70 to 300,
where the stated percentages of A1) to H1) add up to 100, are reacted, then the product is dispersed in water, and, to prepare the polyisocyanate component b) which is dispersible or soluble in water and contains blocked isocyanate groups
A2) 40 to 80% by weight of a polyisocyanate component based on diisocyanates having a molecular weight of 140 to 350, the component having an isocyanurate group content (calculated as C₃N₃O₃; molecular weight = 126) of 2 to 30% by weight, and
B2) 5 to 30% by weight of one or more isocyanate group blocking agents which are monofunctional for the purposes of the isocyanate addition reaction and are selected from the group of the oximes and/or pyrazoles, and
C2) 0 to 15% by weight of an anionic or potentially anionic synthesis component comprising at least one compound having at least one group which is reactive towards NCO groups and at least one group capable of salt formation, which may optionally be present in at least partly neutralized form, and
D2) 5 to 30% by weight of a nonionic hydrophilic synthesis component consisting of at least one compound which is mono- or difunctional for the purposes of the isocyanate addition reaction and has at least one hydrophilic polyether chain, and
E2) 0 to 15% by weight of one or more polyhydric alcohols having 2 to 4 hydroxyl groups and a molecular weight of 62 to 250, and
F2) 0 to 15% by weight of one or more (cyclo)aliphatic polyamines having 2 to 4 amino groups and a molecular weight of 60 to 300, and
G2) 0.5 to 15% by weight of one or more stabilizing components which are mono- or difunctional for the purposes of the isocyanate addition reaction and have 1 to 2 hydrazide groups and a molecular weight of 70 to 300,
where the stated percentages A2) to G2) add up to 100, are reacted, the product is then dispersed in water and subsequently components a) and b) are mixed with one another with the addition where appropriate of the stated auxiliaries and additives or components a) and b) are mixed in water-free form and the mixture is dispersed in water.

3. Use of the binders according to Claim 1 for coating glass surfaces.

4. Use of the binders according to Claim 1 for coating glass bottles.

## Revendications

1. Composition aqueuse de revêtement à base de PUR, qui contient comme liant, une combinaison de :
a) un composant polyol soluble ou dispersible dans l'eau, composé de :
A1) 20 à 60% en poids d'un composant polyisocyanate, consistant en au moins 50% en poids de 4,4'-diisocyanatodicyclohexylméthane et pour le reste, en d'autres polyisocyanates organiques d'intervalle de poids moléculaire allant de 140 à 1500, et
B1) 20 à 60% en poids d'un composant polyétherpolyol, consistant en un ou différents polyétherpolyols d'indice d'hydroxyle allant de 25 à 350 mg KOH/g de substance, et
C1) 2 à 12% en poids d'un composant d'élaboration (potentiellement) anionique constitué d'au moins un composé avec au moins un radical réactif avec les radicaux NCO et au moins un radical capable de former un sel, le cas échéant, au moins partiellement présent sous forme neutralisée, et le cas échéant,
D1) 0 à 12% en poids d'un composant d'élaboration non ionique-hydrophile, consistant en au moins un composé présentant au moins une chaine polyéther hydrophile, mono- ou bifonctionnel, dans le sens des réactions d'addition des isocyanates, et/ou
E1) 0 à 15% en poids d'un ou de plusieurs alcools polyvalents ayant 2 à 4 radicaux hydroxyle, d'intervalle de poids moléculaire allant de 62 à 250, et/ou
F1) 0 à 15% en poids d'une ou de plusieurs polyamines (cycle)aliphatiques ayant 2 à 4 radicaux amino, d'intervalle de poids moléculaire allant de 60 à 300, et/ou
G1) 0 à 30% en poids d'un ou de plusieurs composés polyaminopolyhydroxylés (cyclo) aliphatiques ayant une somme des radicaux hydroxyle et amino allant de 2 à 4 , d'intervalle de poids moléculaire allant de 61 à 300, et/ou
H1) 0 à 15% en poids d'un ou de plusieurs composant stabilisants mono- ou bifonctionnels, dans le sens des réaction d'addition des isocyanates, ayant 1 ou 2 radicaux hydrazide, d'intervalle de poids moléculaire allant de 70 à 300,
où les données en pourcentage de A1) à H1) indiquées s'additionnent pour faire 100, et
b) un composant polyisocyanate soluble ou dispersible dans l'eau, avec des radicaux isocyanate bloqués, composé de :
A2) 40 à 80% en poids d'un composant polyisocyanate, à base de diisocyanates d'intervalle de poids moléculaire allant de 140 à 350, avec une teneur en radicaux isocyanurate (calculée comme C₃N₃O₃ ; poids moléculaire 126) allant de 2 à 30% en poids, et
B2) 5 à 30% en poids d'un ou de plusieurs agents de blocage monofonctionnels pour les radicaux isocyanate, dans le sens des réaction d'addition des isocyanates, choisis parmi le groupe des oximes et/ou des pyrazoles, et
C2) 0 à 15% en poids d'un composant d'élaboration (potentiellement) anionique constitué d'au moins un composé avec au moins un radical réactif avec les radicaux NCO et au moins un radical capable de former un sel, le cas échéant, au moins partiellement présent sous forme neutralisée, et
D2) 5 à 30% en poids d'un composant d'élaboration non ionique-hydrophile, consistant en au moins un composé présentant au moins une chaîne polyéther hydrophile, mono- ou bifonctionnel, dans le sens des réactions d'addition des isocyanates, et
E2) O à 15% en poids d'un ou de plusieurs alcools polyvalents ayant 2 à 4 radicaux hydroxyle, d'intervalle de poids moléculaire allant de 62 à 250, et
F2) O à 15% en poids d'une ou de plusieurs polyamines (cyclo)aliphatiques ayant 2 à 4 radicaux amino, d'intervalle de poids moléculaire allant de 60 à 300, et
G2) 0,5 à 15% en poids d'un ou de plusieurs composant stabilisants mono- ou bifonctionnels, dans le sens des réaction d'addition des isocyanates, ayant 1 ou 2 radicaux hydrazide, d'intervalle de poids moléculaire allant de 70 à 300,
où les données en pourcentage indiquées de A2) à G2) s'additionnent pour faire 100, et
ainsi que le cas échéant, les auxiliaires et additifs usuels de la technologie des revêtements, avec la condition que le rapport des équivalents des radicaux isocyanate bloqués du composant b) aux radicaux hydroxyle du composant a) se situe à au moins 0,8:1.

2. Procédé de préparation d'une composition aqueuse de revêtement suivant la revendication 1, **caractérisé en ce que** pour la préparation d'un composant polyol a), soluble ou dispersible dans l'eau, on fait réagir :
A1) 20 à 60% en poids d'un composant polyisocyanate, consistant en au moins 50% en poids de 4,4'-diisocyanatodicyclohexylméthane et pour le reste, en d'autres polyisocyanates organiques d'intervalle de poids moléculaire allant de 140 à 1500, et
B1) 20 à 60% en poids d'un composant polyétherpolyol, consistant en un ou différents polyétherpolyols d'indice d'hydroxyle allant de 25 à 350 mg KOH/g de substance, et
C1) 2 à 12% en poids d'un composant d'élaboration (potentiellement) anionique constitué d'au moins un composé avec au moins un radical réactif avec les radicaux NCO et au moins un radical capable de former un sel, le cas échéant, au moins partiellement présent sous forme neutralisée, et le cas échéant,
D1) 0 à 12% en poids d'un composant d'élaboration non ionique-hydrophile, consistant en au moins un composé présentant au moins une chaine polyéther hydrophile, mono- ou bifonctionnel, dans le sens des réactions d'addition des isocyanates, et/ou
E1) 0 à 15% en poids d'un ou de plusieurs alcools polyvalents ayant 2 à 4 radicaux hydroxyle, d'intervalle de poids moléculaire allant de 62 à 250, et/ou
F1) 0 à 15% en poids d'une ou de plusieurs polyamines (cyclo)aliphatiques ayant 2 à 4 radicaux amino, d'intervalle de poids moléculaire allant de 60 à 300, et/ou
G1) 0 à 30% en poids d'un ou de plusieurs composés polyaminopolyhydroxylés (cyclo)aliphatiques ayant une somme des radicaux hydroxyle et amino allant de 2 à 4, d'intervalle de poids moléculaire allant de 61 à 300, et/ou
H1) 0 à 15% en poids d'un ou de plusieurs composant stabilisants mono- ou bifonctionnels, dans le sens des réaction d'addition des isocyanates, ayant 1
ou 2 radicaux hydrazide, d'intervalle de poids moléculaire allant de 70 à 300,
où les données en pourcentage indiquées de A1) à H1) s'additionnent pour faire 100, on disperse ensuite dans l'eau et pour la préparation du composant polyisocyanate b) soluble ou dispersible dans l'eau, avec des radicaux isocyanate bloqués, on fait réagir :
A2) 40 à 80% en poids d'un composant polyisocyanate, à base de diisocyanates d'intervalle de poids moléculaire allant de 140 à 350, avec une teneur en radicaux isocyanurate (calculée comme C₃N₃O₃ ; poids moléculaire 126) allant de 2 à 30% en poids, et
B2) 5 à 30% en poids d'un ou de plusieurs agents de blocage monofonctionnels pour les radicaux isocyanate, dans le sens des réaction d'addition des isocyanates, choisis parmi le groupe des oximes et/ou des pyrazoles, et
C2) 0 à 15% en poids d'un composant d'élaboration (potentiellement) anionique constitué d'au moins un composé avec au moins un radical réactif avec les radicaux NCO et au moins un radical capable de former un sel, le cas échéant, au moins partiellement présent sous forme neutralisée, et
D2) 5 à 30% en poids d'un composant d'élaboration non ionique-hydrophile, consistant en au moins un composé présentant au moins une chaîne polyéther hydrophile, mono- ou bifonctionnel, dans le sens des réactions d'addition des isocyanates, et
E2) O à 15% en poids d'un ou de plusieurs alcools polyvalents ayant 2 à 4 radicaux hydroxyle, d'intervalle de poids moléculaire allant de 62 à 250, et/ou
F2) 0 à 15% en poids d'une ou de plusieurs polyamines (cyclo)aliphatiques ayant 2 à 4 radicaux amino, d'intervalle de poids moléculaire allant de 60 à 300, et/ou
G2) 0,5 à 15% en poids d'un ou de plusieurs composant stabilisants mono- ou bifonctionnels, dans le sens des réaction d'addition des isocyanates, ayant 1 ou 2 radicaux hydrazide, d'intervalle de poids moléculaire allant de 70 à 300,
où les données en pourcentage de A2) à G2) indiquées s'additionnent pour faire 100, on disperse ensuite dans l'eau et ensuite, on mélange l'un avec l'autre, les composants a) et b), le cas échéant avec addition des auxiliaires et additifs cités ou les composants a) et b) sont mélangés sous forme anhydre et le mélange est dispersé dans l'eau.

3. Utilisation du liant suivant la revendication 1, pour le revêtement de surfaces en verre.

4. Utilisation du liant suivant la revendication 1, pour le revêtement de bouteilles en verre.
